# FASCICULE DE BREVET EUROPEEN

(11) **EP 2 826 752 B1**
(45) Date de publication et mention de la délivrance du brevet: **22.02.2017**
(21) Numéro de dépôt: 14003511.4
(22) Date de dépôt: 28.10.2011
(51) Int. Cl.: C02F 1/54, C02F 11/14, C02F 11/06, B01D 21/01, B01D 21/02, B01D 21/28, C02F 1/20, C02F 1/74

(54) **Procédé de clarification des eaux contenant des structures colloïdales et gâteau obtenu**
Verfahren zur Wasserklärung welches das Kolloide enthält sowie dadurch erhaltender Schlammkuchen
A method for clarifying water containing colloides and sludge cake obtained

(30) Priorité: 29.10.2010 FR 1004285
(43) Date de publication de la demande: 21.01.2015
(62) Demande divisionnaire de: 11787700.1
(73) Titulaire: OREGE, 78350 Jouy-en-Josas (FR)
(72) Inventeur: Capeau, Patrice, F-13100 Aix-en-Provence (FR); Lopez, Michel, F-11110 Coursan (FR); Gendrot, Pascal, F-78350 Jouy en Josas (FR)
(74) Mandataire: Benech, Frédéric

(56) Documents cités:
- EP-A1- 0 040 887
- WO-A1-2010/019633

## Description

La présente invention concerne un procédé de clarification des eaux par traitement des structures colloïdales contenues dans un liquide et/ou une boue alimentée en flux continu à un débit déterminé.

Elle trouve une application particulièrement importante bien que non exclusive dans le domaine de la clarification des eaux troubles, par exemple comprenant de la matière sèche (MS) et dans celui de la déshydratation des boues.

La plupart des eaux usées, polluées, vaseuses ou boueuses comprennent des colloïdes, qui sont présents soit dans les parties solides en suspension notamment dans leur fraction organique, soit dans les eaux elles mêmes.

Ces colloïdes donnent à l'ensemble de l'effluent une coloration et des caractéristiques d'opacité, source d'inconvénients.

L'invention en attaquant ces structures colloïdales, va permettre d'obtenir un effluent après traitement particulièrement transparent.

On connaît déjà des procédés permettant d'éliminer à tout le moins en partie la présence de colloïdes.

Ils consistent essentiellement à ajouter dans la chaîne du procédé d'épuration un ou plusieurs agents coagulants, puis floculants et ce en quantités suffisantes pour agglomérer et fixer les colloïdes, que l'on élimine ensuite par exemple par décantation ou centrifugation.

Les procédés de l'art antérieur ne permettent cependant pas d'éliminer suffisamment les colloïdes de l'effluent liquide, qui reste souvent à forte turbidité et/ou dont la fraction solide reste très hydratée.

De tels traitements entraînent alors des coûts de transport importants, et en général de combustion supplémentaire.

Avec l'invention il va être possible de réduire la quantité de boue tout en obtenant une eau d'une grande pureté sans ajouts de réactifs en quantité importante.

On sait que les particules colloïdales présentent deux caractéristiques essentielles.

Elles ont un diamètre très faible (de 1nm à 1 µm) et sont chargées électronégativement, engendrant des forces de répulsions intercolloïdales.

Ces deux caractéristiques confèrent aux colloïdes une vitesse de sédimentation extrêmement faible, que l'on peut même considérer comme nulle dans le cadre du traitement de l'eau.

Avec les traitements connus de coagulation/floculation, on résout ce problème de la façon suivante.

Dans un premier temps, la coagulation, par ajout de sels métalliques (généralement de fer ou d'aluminium) permet de supprimer les répulsions intercolloïdales. Les cations métalliques (A1³⁺ et Fe³⁺) se lient aux colloïdes et les neutralisent. Les particules colloïdales peuvent désormais se rencontrer.

Dans un second temps, la floculation permet de s'attaquer au problème du faible diamètre des colloïdes. Leur faible masse ne permet pas en effet de sédimentation naturelle et exploitable dans le cadre d'un traitement.

Grâce à l'ajout de floculant, une agglomération des particules colloïdales est engendrée, l'agglomérat de colloïdes appelé floc disposant d'une masse suffisante pour pouvoir se décanter.

Le floculant ajouté est généralement un polymère qu'il soit organique ou naturel.

On connaît également (FR 2 175 897) un procédé de traitement de boues utilisant une circulation continuelle dans un circuit étanche avec saturation en gaz, et EP-A-0040887 qui décrit un procédé et un dispositif pour traiter et rendre hygiénique des boues d'égoût et autres boues organiques.

L'invention part d'une idée radicalement différente des idées de l'art antérieur, pour éliminer les colloïdes.

Pour ce faire elle vise à introduire une grande énergie (> 10.000 J) dans l'effluent chargé de colloïdes à la fois liquide et boueux, le tout en milieu confiné et oxydant (air), ce qui, de façon étonnante va entraîner la perte des caractéristiques négatives des colloïdes empêchant leur élimination.

Appliqué à la déshydratation des boues, le procédé facilite la séparation liquide/solide et permet d'obtenir un excellent résultat, qu'il soit mis en oeuvre seul ou en combinaison avec d'autres techniques de séparation comme le centrifugeage ou la filtration.

En particulier, ce procédé permet d'obtenir d'excellents résultats seul pour des boues très minéralisées (c'est à dire présentant un % de matière organique sur 100% en poids de matière sèche inférieur à de 5 à 15%).

Avec des boues moins minéralisées, il est possible d'obtenir un rendement optimisé lorsqu'il est combiné avec un outil de séparation complémentaire disposé en aval du dispositif (filtre à bande ou centrifugation), améliorant de plus de 10% la dessiccation, par exemple de 25%.

Les installations existantes peuvent ainsi être facilement améliorées en rajoutant un ou plusieurs réacteurs mettant en oeuvre l'invention, ce qui va ensuite et par exemple économiser sur les coûts de transport et d'incinération finale des boues.

Elle présente par ailleurs une très faible consommation électrique et utilise peu de matière consommable (air comprimé, additif)

De plus, le procédé met en oeuvre un dispositif simple de très faible encombrement, facilement transportable, qui va donc pouvoir être installé sur des sites peu accessibles.

Avec l'invention un fonctionnement en continu est possible, et ce avec des contraintes d'exploitation peu exigeantes.

Le traitement selon l'invention ne génère par ailleurs aucune pollution tout en mettant en oeuvre une technique en elle-même beaucoup plus économique que celles connues dans le domaine de la séparation liquide/solide (centrifugeuse, filtre presse, filtre bande, recirculation oxygénée continue, etc).

Enfin avec l'invention on obtient de façon étonnante un gâteau poreux et déshydraté de type nouveau constituant un résidu utilisable.

Dans ce but, l'invention propose essentiellement un procédé de clarification par traitement des structures colloïdales contenues dans un liquide et/ou une boue alimenté en flux continu à un débit Q_{EB} = V_{EB}/heure, caractérisé en ce que on projette le flux dans une enceinte en surpression par rapport à la pression atmosphérique, ladite enceinte étant une enceinte de passage du flux en continu ou semi continu présentant un volume v < V_{EB}/20, en injectant simultanément de l'air dans l'enceinte à un débit d en dessous de l'alimentation du flux, dans ladite enceinte.

Dans la définition ci-dessus, la valeur V_{EB} est bien entendu une valeur de volume par exemple exprimée en m³.

Par enceinte on entend une cuve ou un réacteur de volume clos déterminé comprenant une entrée du flux et une sortie du flux après traitement de section plus limitée que le réacteur.

L'enceinte est donc une enceinte de passage du flux en pression.

Par une valeur v < V/20 ou v < 5 % V on entend une valeur inférieure ou à peu près inférieure, avec une tolérance de l'ordre de ± 10% à 20%.

Avantageusement v ≤ V/25 ou ≤ V/50.

Dans un mode de réalisation avantageux de l'invention on atteint notamment les excellents résultats grâce au cumul de plusieurs fonctions dans la même enceinte de petite taille en ménageant quatre zones fonctionnelles.

Une zone d'introduction d'air légèrement compressé, zone où se déroule aussi une mise en suspension ou une prévention de la décantation des particules les plus lourdes, néanmoins capables de monter dans le réacteur et de sortir en partie haute avec les particules les plus fines.

Une zone de chocs hydrauliques ou s'effectue l'introduction des flux liquides.

Une zone de montée du lit constituée, pour une quantité en poids d'environ 1 de gaz, de 0,1 d'eau et de 0,01 de solide. Dans cette zone un très fort brassage est rendu possible par l'apport d'air de la qualité préconisée (débit et pression).

Une zone de décompression par exemple réglée par une vanne située en partie haute du réacteur. Dans l'exemple de cette vanne celle-ci doit permettre de maintenir le réacteur à une pression relative de 0,5 à 2 bars environ.

Avec l'invention il est donc possible de transmettre une forte énergie cinétique à partir de l'énergie cinétique de pompage, transformée en énergie de choc à l'intérieur d'un petit volume.

L'introduction simultanée d'une quantité d'air augmente le niveau énergétique de l'enceinte de petite dimension, en accroissant encore les turbulences.

Le régime hydraulique dans l'enceinte est ainsi agencé pour être fortement turbulent (Rₑ >> à 3.000 m²/s), ce qui entraîne, en combinaison avec l'oxydation liée à l'injection d'air, l'élimination ou cassage des structures colloïdales.

Les collisions entre l'air, l'eau et la boue amènent en effet l'air au sein du solide, et ce en remplaçant physiquement une partie de l'eau interstitielle entre colloïdes par de l'air tout en fournissant l'oxydation de l'effluent.

Par exemple dans une boue industrielle issue de l'industrie pétrolière fortement chargée en MS (> 20 g/l) contenant 90% de matière organique, il a été observé en cas de dessiccation par filtre ou centrifugeage une eau résiduelle colorée, turbide, signe qu'elle contient encore des colloïdes, alors que en utilisant (préalablement ou non à un autre moyen de dessiccation) le procédé selon l'invention, on obtient une eau résiduelle transparente, dont le DCO est inférieure à 300 mg/l, c'est à dire dénuée de colloïdes pour l'homme de l'art.

Enfin, de façon inattendue, on a pu observer que le procédé selon l'invention permettait le stripage des molécules dissoutes dans l'eau, entraînant une dépollution importante et aidant ainsi encore à la clarification recherchée.

Avantageusement le flux est formé d'au moins deux flux partiels, qu'on projette l'un sur l'autre.

Dans des modes de réalisation avantageux, on a de plus recours à l'une et/ou à l'autre des dispositions suivantes :
- on injecte le flux dans l'enceinte par deux orifices identiques opposés en vis à vis situés dans la moitié inférieure de ladite enceinte, l'air étant injecté en dessous desdits orifices, l'air, l'eau et la boue s'échappant en partie haute de l'enceinte ;
- l'air est injecté avec un débit d > 1,5 Q_{EB}, par exemple supérieur à 5 Q_{EB}, à 10 Q_{EB} ou compris entre 1,5 fois et 15 fois Q_{EB} ;
- l'air est injecté à pression moyenne. Par pression moyenne on entend compris entre 1,4 bar et 2,5 bar, avantageusement entre 1,6 bar et 1,9 bar. Une telle pression génère de plus grosses bulles qui vont être à même de mieux pénétrer le milieu en se répartissant de façon aléatoire dans l'enceinte.
- V ≤ V_{EB}/50 ;
- v ≤ V_{EB} /100 ;
- on ajoute au moins un réactif liquide en continu à un débit q à l'intérieur de l'enceinte ;
- le débit Q_{EB} est supérieur ou égal à 15 m3/h, le débit d est supérieur ou égal à 25 m3/h et la pression relative dans l'enceinte est supérieure ou égale à 0,8 bar ;
- le débit Q_{EB} est supérieur ou égal à 20 m3/h, le débit d est supérieur ou égal à 50 m3/h et la pression relative dans l'enceinte est supérieure à 1,2 bar ;
- le réactif liquide est un floculant organique de type cationique.
- on dégaze les effluents en sortie de l'enceinte et on utilise les gaz obtenus pour alimenter l'injection d'air en partie basse.

Cette description décrit également un dispositif de traitement des structures colloïdales contenues dans un liquide et/ou une boue alimenté en flux continu à un débit Q_{EB} = V_{EB}/heure, ledit dispositif comportant une enceinte fermée de volume v < V_{EB}/20 comprenant au moins deux orifices identiques opposés en vis à vis situés dans la moitié inférieure de ladite enceinte,
des moyens de captation de la boue et d'alimentation dans la dite enceinte du flux de boue ainsi captée en au moins deux flux partiels respectivement injecté chacun par un desdits orifices,
des moyens d'alimentation de l'enceinte en air à un débit d en dessous desdits orifices, et
des moyens d'évacuation du flux agencés pour maintenir l'enceinte en surpression.

Avantageusement le flux est évacué en partie haute par le biais d'une soupape de surpression déclenchant au dessus d'une valeur seuil déterminée.

Egalement avantageusement le volume v ≤ V V_{EB} /50.

Egalement avantageusement le volume v ≤ V_{EB} /100.

Dans un autre mode de réalisation avantageux le dispositif comporte des moyens d'alimentation d'un réactif liquide à un débit déterminé directement dans l'enceinte.

L'invention sera mieux comprise à la lecture de la description qui suit de modes de réalisation donnés à titre d'exemples non limitatifs. La description se réfère aux dessins qui l'accompagnent dans lesquels :
- La figure 1 est un schéma illustrant le principe du procédé de traitement selon un mode de réalisation de l'invention.
- La figure 2 est un schéma de fonctionnement d'un mode de réalisation d'un dispositif décrit dans cette description.
- La figure 3 est une vue schématique illustrant la transformation d'une boue en utilisant un dispositif décrit dans cette description.

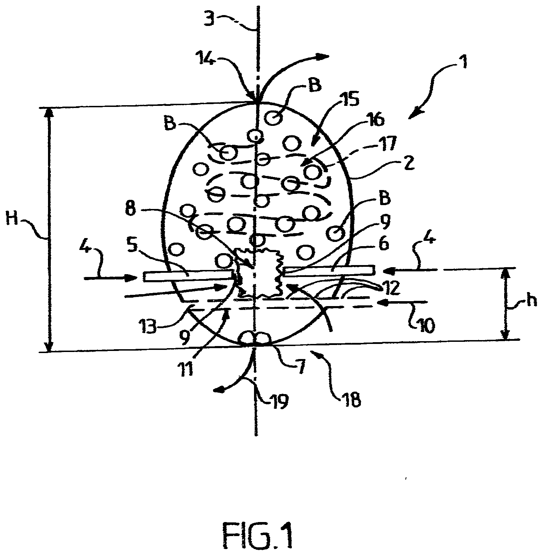

La figure 1 montre les principes du procédé de traitement ou cassage des structures colloïdes contenus dans un effluent, selon le mode de réalisation de l'invention plus particulièrement décrit ici.

Dans un réacteur 1 formé d'une enceinte 2, oblongue, s'allongeant autour d'un axe 3, de petit volume v par exemple de l'ordre de 50 litres, on injecte les effluents (flèches 4) par deux piquages opposés 5, 6, symétriques par rapport à l'axe 3 de l'enceinte.

Les piquages sont situés en partie basse de l'enceinte, par exemple à une distance h du fond 7 de l'enceinte comprise entre le cinquième et le tiers de la hauteur H de l'enceinte.

Ces deux piquages situés en vis à vis l'un de l'autre permettent une alimentation en pression du flux d'eau très chargé en matière sèche (MS), (par exemple τ de MS 10%/poids total) ce qui entraîne un choc important au niveau de la rencontre des deux flux dans la zone 8.

En d'autres termes, le pompage des eaux de l'extérieur (non représenté) introduites dans l'enceinte du réacteur 1 de petite taille, par les deux piquages en face à face permet un choc entre les flux dans la zone 8 du fait de la pression de sortie de la ou des pompes d'alimentation (non représentées), qui dépend de la hauteur d'eau desdites pompes d'alimentation en amont des piquages et des pertes de charges du circuit.

Classiquement, en utilisant des pompes industrielles du commerce et un circuit sans trop d'accidents, une pression de 2 bar en sortie 9 des piquages dans l'enceinte est aisément atteignable.

L'énergie cinétique de pompage est alors transformée en énergie de choc, maximisée en augmentant la vitesse d'introduction dans l'enceinte pour la sortie des piquages des ajustages 9 de dimensions réduites, mais compatibles avec la granulométrie maximum de la boue.

Par ailleurs, et selon le mode de réalisation de l'invention plus particulièrement décrit ici on introduit une quantité d'air surpressé (flèche 10) en dessous de la zone 8.

Par surpressé on entend une légère surpression qui peut être comprise entre 0,1 bar relatif et 1 bar relatif par rapport à la pression atmosphérique, par exemple 0,8 bar relatif.

Cette introduction d'air se fait par une rampe 11 de répartition de l'air, par exemple une rampe formée par un tuyau circulaire, en serpentin ou longiligne, permettant d'amener des bulles d'air de façon répartie sur la surface de l'enceinte, par des orifices 12, répartis le long dudit tuyau 13.

L'air peut également être amené par un piquage en partie basse.

La rampe est située en dessous de la rencontre des effluents en zone 8, par exemple entre le dixième et le cinquième de la hauteur H de l'enceinte, et génère de grosses bulles B, par exemple des bulles de diamètre compris entre 1 mm et 1 cm.

Cette introduction d'air augmente le niveau énergétique de l'enceinte, en surpression par rapport à sa sortie 14 d'évacuation des effluents après traitement.

On obtient aussi en partie supérieure 15 de l'enceinte une zone 16 fonctionnelle, dans laquelle un mélange extrêmement turbulent animé de mouvements browniens (trait 17 interrompu) est réalisé.

En partie basse 18 du réacteur, de façon connue en elle-même, il est prévu une purge 19 des éléments trop denses qui ne s'échappent pas par le dessus du réacteur et qui est vidée séquentiellement.

A la sortie 14 du réacteur s'échappent l'air, l'eau et les boues qui après décantation, donner une eau transparente physiquement séparée de la matière solide, avec un taux de matière solide très bas, inférieur notamment à 30 mg/l voire à 10 mg/l, alors qu'initialement il pouvait avoisiner plus de 500 mg/l.

La matière solide décolloïdée obtenue à ce niveau est plus poreuse et par la suite aisément compactable. Elle peut même, en fonction de son taux de matière organique initiale, être directement peletable en sortant du réacteur.

L'air est introduit à une pression moyenne, par exemple comprise entre 1,6 bars et 1,9 bars absolu à la pression dans l'enceinte elle-même, afin qu'il puisse y avoir de grosses bulles dans le milieu, qui vont pouvoir le pénétrer et se répartir de façon aléatoire dans le réacteur pour réaliser le mélange attendu.

L'air est par ailleurs introduit à fort débit d, c'est à dire de 1,5 fois à 15 fois (en Nm³/h) celui Q_{EB} de l'eau entrant (en m³/h).

Le gaz extrait du réacteur sort avec l'eau et la boue au débit du surpresseur et peut être récupéré, traité et le cas échéant recyclé pour être réutilisé en partie basse du réacteur.

A noter que la présence de matières grossières du type sable, gravier etc, augmente le nombre de chocs et améliore de ce fait le processus.

La pression de l'enceinte est quant à elle agencée et/ou réglée pour optimiser l'énergie interne en générant un flux ascensionnel sortant par le haut.

Une telle pression est donc déterminée en fonction des caractéristiques fonctionnelles du circuit (Hauteur d'eau de pompes) mais aussi du type d'effluents et des débits de traitement recherché.

La dimension finalement choisie du réacteur sera également déterminée par l'homme du métier en fonction des connaissances de base de l'ingénieur du domaine du génie chimique et du diagramme des flux.

La pression et la sortie sont par exemple assurées par le biais d'une vanne soupape qui libère le flux lorsque la pression donnée est dépassée.

Comme le procédé selon l'invention met en oeuvre une agitation en trois phases, solide, liquide et gazeuse, il est nécessaire en sortie, de mettre une séparation tenant compte du dégazage, de la phase solide plus dense que l'eau et de l'évacuation de l'eau.

Dans un mode de réalisation avantageux on additionne de plus un coagulant (exemple chaux, chlorure ferrique ...) .

Cette addition complémentaire se fait par exemple dans la zone fonctionnelle 16.

Ainsi avec un réacteur de 55 litres le diamètre et des buses d'injection dans ce réacteur de 40 mm de diamètre, on peut traiter jusqu'à 20 m³/h de boue.

De façon étonnante, on observe par ailleurs avec le procédé de l'invention que lorsque la pression dans le réacteur est supérieure en pression relative à 0,8 bars, que le débit d'alimentation Q_{EB} des eaux boueuses par exemple formé par des boues d'épandage chargées en MS (matières sèches) à 5%, lesdites MS étant issues de la dégradation biologique d'herbe de marais, d'argile, de sable et de résidus pétroliers divers à l'état de traces (< 1 %) est supérieur à 15 m³/h et que le débit d'air d est supérieur à 25 m³/h, on obtient une séparation exceptionnelle, avec une vitesse de décantation maximale d'une boue qui présente après séchage un aspect poreux granuleux nouveau.

Avec un réacteur de 55 litres et des buses d'injection de l'effluent à l'intérieur de 40mm, on obtient des valeurs de vitesse de percussion extrêmement rapides et des temps de séjour dans le réacteur qui sont particulièrement courts [cf. tableau I ci-après}.

**TABLEAU I**

| | | | | | | | | | | |
|---|---|---|---|---|---|---|---|---|---|---|
| Débit d'effluent | 1 | 2 | 3 | 4 | 5 | 6 | 7 | 10 | 15 | 20 |
| Vitesse percussion particules solides | 0,1111 | 0,221 | 0,332 | 0,442 | 0,553 | 0,774 | 1,105 | 1,658 | 2,210 | |
| Temps séjour réacteur | 198,00 | 99,00 | 66,00 | 49,50 | 39,60 | 28,29 | 19,80 | 14,85 | 9,9 | |

Grâce à l'invention il est donc possible d'obtenir une déshydratation poussée bien supérieure à celle obtenue grâce aux techniques existantes et ce en quelques secondes.

En plus de ce gain de temps considérable dans le traitement, de très faible consommation électrique, d'air comprimé et de floculant sont nécessaires.

Le faible encombrement de l'enceinte la rend par ailleurs facilement transportable, et permet son installation dans les sites d'accès difficile, le tout en autorisant un fonctionnement en continu d'une grande simplicité.

Le traitement selon l'invention ne génère aucune pollution, et ce avec une installation beaucoup plus économique comparée aux autres systèmes de traitement envisageables pour le seul travail de séparation liquide/solide comme sont les centrifugeuses, les filtres presse, les filtres bandes etc.

A titre d'exemple on a fait figurer sur le tableau II ci-après, l'amélioration Δ en siccité, obtenue avec le procédé selon l'invention pour une boue de station d'épuration industrielle de Fos sur Mer, peu minéralisée (90% de matière organique) dans le domaine de la pétrochimie.

La comparaison est faite entre un simple traitement sur filtre bande (toile filtrante sur laquelle l'eau et la boue sont déversées par pompage et véhiculées entre des rouleaux d'essorage), et le même filtre bande après prétraitement avec le procédé selon l'invention.

Pour un volume d'enceinte v = 551, on a fait varier les paramètres de débit de boue Q_{EB} (m³/h) de débit de gaz d(Nm³/h), la pression relative P à l'intérieur de l'enceinte (bars), pour une charge en MS déterminée à l'entrée de l'enceinte (en g/l).

Les résultats sont par ailleurs donnés en fonction de l'état initial des boues i.e. fraîche (sans stockage intermédiaire) peu fraîche (après stockage de trois jours) ou fermentée (plusieurs jours de stockage en absence d'oxygène).

On voit qu'un fort débit de gaz (huit fois le débit de boue) et une forte pression dans l'enceinte (1,3 bars) améliore de 48,8% la siccité (essai N°10) pour une charge assez faible initiale (MS de 8,2 g/l), ce qui est la preuve de l'efficacité d'une bonne décolloïdation.

En moyenne (voir essais N°13 à 16) une boue fraîche chargée à 32,4 g/1 pour un débit de gaz vingt fois supérieur à celui des boues, et une pression de 1 bar relatif dans l'enceinte, le procédé selon l'invention améliore la siccité (Taux de Matière Sèche (MS) en poids par rapport au poids total de la boue i.e.. MS + liquide) de 24 à 36,4 % soit en moyenne 30%.

**TABLEAU II**

| **Essais N°** | **Type Boue industrielles Fos sur Mer** | **Débit** | | **Pression Enceinte** | **Entrée** | Δ Siccité | Sortie |
|---|---|---|---|---|---|---|---|
| | | | | **P** | | | |
| | | **Q_{EB} Boue** | **d Gaz** | | **MS** | | |
| | | **m3/h** | **Nm3/h** | **Bar** | **g/l** | % | |
| 1 | peu fraîche | 2,8 | 40 | 0,5 | 24 | | 14,7 |
| 2 | peu fraîche | **2** | **50** | 0,8 | **24** | | 20 |
| 3 | peu fraîche | **3** | **60** | 1,4 | **28** | | 35,5 |
| 4 | peu fraîche | **2** | **60** | 1 | **26** | | 22,1 |
| 5 | peu fraîche | **2** | **60** | 1 | **26** | | 21,1 |
| 6 | peu fraîche | **2** | **60** | 1 | **26** | | 20,4 |
| 7 | fraîche | **1,5** | **60** | 1,1 | **26** | | 26,6 |
| 8 | fraîche | **1,3** | **60** | 1 | **26** | | 22,2 |
| 9 | fraîche | **1,2** | **60** | 0,8 | **26** | | 24,4 |
| 10 | fermentée | **8** | **60** | 1,3 | **8,2** | | 48,8 |
| 11 | fermentée | **6,2** | **60** | 1,1 | **11** | | 32 |
| 12 | fermentée | **3** | **70** | 0,8 | **24** | | 26,2 |
| 13 | fraîche | **3** | **60** | 1 | **32,4** | | 24 |
| 14 | fraîche | **3** | **60** | 1 | **32,4** | | 26 |
| 15 | fraîche | **3** | **60** | 1 | **32,4** | | 36,4 |
| 16 | fraîche | **3** | **60** | 1 | **32,4** | | 30,1 |
| 17 | fraîche | **4,4** | **40** | 1,6 | **32,4** | | 27,2 |
| 18 | fraîche | **5,6** | **50** | 0,9 | **32,4** | | 33 |
| 19 | peu fraîche | **6,5** | **60** | 0,5 | **24** | | 28,2 |

On a ensuite représenté sur le Tableau III, un exemple de résultats obtenus avec un dispositif seul (sans traitement complémentaire) sur des sédiments (boue très minéralisée) et avec un traitement complémentaire (filtre bande).

Le traitement avec l'invention seule est à comparer avec le filtre bande seul qui ne dépasse pas une amélioration de la siccité de 15 à 18 %.

D'excellents résultats sont ici obtenus même sans traitement complémentaire avec filtre ou centrifugeuse.

**TABLEAU III**

| **Essais N°** | **Type Boue industrielles Fos sur Mer** | **Débit** | | **Pression Enceinte** | **Entrée** | Δ Siccité | Sortie |
|---|---|---|---|---|---|---|---|
| | | **Q_{EB} Boue** | **d Gaz** | **P** | **MS** | | |
| | | **m3/h** | **Nm3/h** | **Bar** | **g/l** | **%** | **%** |
| 20 | sédiments | **1.3** | **60** | 1,1 | **130** | | 61.6 |
| 21 | sédiments | **1.2** | **60** | 1,1 | **84** | 56.7 | 69.5 |
| 22 | sédiments | **1.3** | **70** | 1 | **84** | 43.2 | 67.1 |
| | | | | | | Seul | Seul + Filtre |

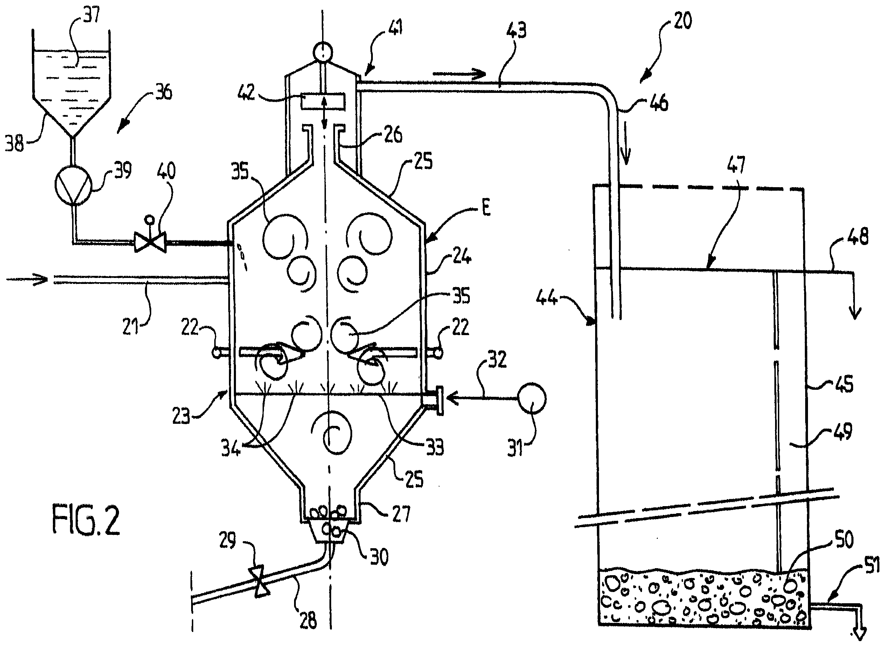

On a représenté sur la figure 2 un schéma de fonctionnement d'un dispositif 20 selon le mode de réalisation de l'invention plus particulièrement décrit ici.

Le dispositif 20 permet la séparation entre la partie liquide et la matière sèche de la boue alimentée en 21 en flux continu à un débit Q_{EB} = V/h, l'alimentation en 21 se séparant ensuite en deux pour alimenter les piquages 22.

Plus précisément le dispositif 20 comporte une enceinte E en acier inox, fermée, de volume v inférieur à 20 fois V, par exemple de 55 litres pour un débit Q = V/h de 1,5 m³/h, comprenant au moins deux orifices identiques ou piquages 22, opposés, en vis-à-vis, situés dans la moitié inférieure 23 de l'enceinte, par exemple à une distance égale au tiers de la hauteur de l'enceinte.

L'enceinte est par exemple constituée par une partie cylindrique 24 terminée en partie haute et en partie basse par deux zones coniques identiques 25 par exemple d'angles au sommet de l'ordre de 120°.

Chaque extrémité est elle-même terminée par un tube supérieur 26, et inférieur 27. Le tube inférieur 27 est relié à une canalisation 28 d'évacuation intermittente, munie d'une vanne 29, de la matière sèche 30 qui aurait été décantée dans le fond 27 de l'enceinte.

Le dispositif 20 comprend de plus des moyens 31 d'alimentation de l'enceinte en air 32 à un débit d en dessous des orifices 22.

Cette alimentation se fait par exemple par l'intermédiaire d'une tuyauterie rectiligne ou tube 33, de petit diamètre, par ex de 5 cm de diamètre, de longueur sensiblement égale au diamètre de l'enceinte cylindrique, comprenant des buses 34 régulièrement répartie, de sortie de l'air comprimé de façon répartie dans l'enceinte, créatrice de bulles importantes qui vont entraîner d'importants brassages (ronds 35).

Des moyens 36 connus en eux-mêmes, d'alimentation d'un réactif liquide 37, par exemple un coagulant, sont prévus. Ils sont par exemple formés d'un bac de stockage 38, alimentant par l'intermédiaire d'une pompe doseuse 39 et d'une vanne télécommandée 40, l'intérieur de l'enceinte au dessus des piquages 22, dans la zone de turbulence.

Le dispositif 20 comprend de plus des moyens 41 d'évacuation en continu du liquide ayant pénétré dans l'enceinte par l'intermédiaire d'une vanne ou soupape 42 qui s'ouvre au delà d'une pression déterminée dans l'enceinte, par exemple 1,3 bar.

Il est également possible de ne pas prévoir de vanne, le circuit en aval lui-même constituant la perte de charge nécessaire au maintien en surpression relatif de l'enceinte.

L'effluent 43 est alors évacué en partie haute pour aboutir dans un bac 44 de décantation connu en lui-même.

Par exemple, ce bac 44 de décantation est constitué par une cuve cylindrique 45 dans laquelle aboutit la tuyauterie d'évacuation 46 en dessous du niveau 47 de fonctionnement pour limiter les turbulences.

Le bac 44 se vide quant-à-lui par trop plein en 48, au travers d'une portion 49 de cuve latérale non turbulente séparée du reste de la cuve par une paroi ajourée par endroit.

La matière solide décantée 50 est évacuée en partie basse 51 pour pouvoir être traitée ultérieurement.

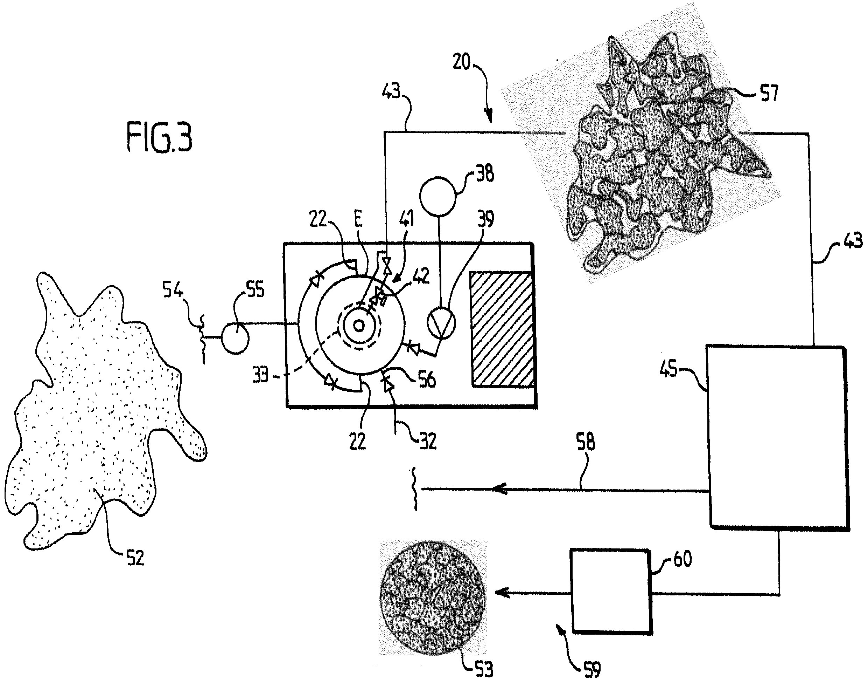

On a représenté sur la figure 3 en vue de dessus, le dispositif 20 de la figure 2 permettant d'obtenir, à partir de la boue 52, la galette 53, selon l'invention.

Dans la suite de la description on utilisera les mêmes références pour désigner les mêmes éléments.

A partir de la boue ou effluent 52 chargé en matière sèche, que l'on pompe dans un milieu 54 par l'intermédiaire d'une pompe 55 ayant une hauteur d'eau Hₒ à un débit Q_{EB}, on alimente l'enceinte E par l'intermédiaire des deux piquages 22 situés en vis-à-vis, l'un en face de l'autre. On a donc à chaque piquage un débit divisé par deux Q_{EB}/2.

L'alimentation en air 32 se fait en dessous des piquages comme décrit ci-avant, par un piquage 56.

Un réactif (coagulant tel que chlorure ferrique, ou chaux) connu en lui-même et à adapter par l'homme du métier en fonction des effluents traités, est alimenté en continu dans l'enceinte E à partir du bac 38 via la pompe doseuse 39.

Les effluents une fois traités dans l'enceinte comme décrit ci-avant, sont évacués en partie haute en 41 pour obtenir l'effluent défragmenté décolloïdé 57 comme représenté schématiquement sur la figure 3.

Cet effluent décolloïdé et défragmenté est ensuite alimenté dans le bac de décantation 45. Après une décantation qui intervient en continu en quelques secondes, on observe alors en 58 une eau extrêmement claire, par exemple laissant passer 99% de la lumière qui la traverse, voir 99,5%.

En 59, après traitement éventuel complémentaire de compactage en 60, on obtient une galette de boue particulièrement intéressante, à la fois aérée, solidifiée et présentant une excellente porosité comprise entre 5% et 15%.

Un tel produit obtenu avec le procédé selon l'invention est nouveau et va former matière à des utilisations ultérieures à titre de terreau, à titre de matière première dans la construction etc.

On va maintenant décrire en référence à la figure 3 le fonctionnement d'une épuration selon le mode de réalisation de l'invention plus particulièrement décrit ici.

A partir d'un milieu par exemple une rivière 54 chargée en boue 52, on extrait par pompage (55) cette boue.

Dans un exemple d'application le taux de boue, i.e. le pourcentage en matière massique de matière sèche, est par exemple compris entre 3 et 10%.

Cette boue alimente l'enceinte E par exemple de volume V = 100 1, à un débit compris par exemple entre 5 et 50m³/h par exemple 15m³/h.

Comme décrit ci-avant, cet effluent est injecté dans le réacteur par les deux piquages 22 en vis-à-vis. Simultanément on alimente en air par la rampe inférieure 33 du réacteur avec un débit supérieur par exemple à 25Nm³/h.

La pression à l'intérieur de ce dernier est comprise entre 0,3 et 1,5 bars relatif, par exemple supérieure à 0,8 bars relatif, en fonction de la hauteur d'eau de la pompe et/ou des pompes d'alimentation des effluents, ainsi que de la perte de charge créée par l'enceinte elle-même et par la vanne d'évacuation 42 située en partie haute de ladite enceinte.

La pression à l'intérieur du réacteur peut notamment être régulée par l'intermédiaire de cette vanne supérieure ou soupape.

L'effluent ainsi brassé et alimenté en air, reste dans le réacteur pendant une période correspondant au rapport relatif entre les débits, le volume et la pression.

Il est donc conservé par exemple pendant un temps de séjour de quelques secondes, par exemple inférieur à 1mn avant d'être évacué.

Ce temps peut même être très inférieur puisqu'avec un débit d'effluent supérieur à 20m³/h on peut par exemple rester dans l'enceinte un temps inférieur à 10 secondes.

Le débit d'alimentation en boue a quant à lui une action directe sur la vitesse de percussion suivant le tableau produit ci-avant, sachant que le temps de contact et de séjour dans le réacteur sous pression joue également sur la vitesse de formation des flocs et de leur décantation.

Le débit d'air et l'influence de la pression dans le réacteur sont par ailleurs des éléments qui, au vue du résultat recherché, vont être adaptés, de façon à la portée de l'homme du métier.

Une fois les boues traitées, elles sortent du réacteur à une pression correspondant à la pression d'écoulement du débit du fluide dans le tuyau 43, au bac de décantation 45, dans lequel la décantation va s'effectuer de façon connue en elle-même.

L'eau obtenue en surnageant est d'une grande pureté et elle est évacuée elle-même en continu en 58.

La boue obtenue en partie basse du bac de décantation est elle, évacuée soit en continu, soit sous forme discontinue, selon des périodes déterminées, par exemple une fois par jour.

Le fait de réévacuer cette boue très vite augmente sa qualité notamment en ce qui concerne sa bonne porosité.

Le traitement opéré grâce au procédé et réacteur selon l'invention permet ainsi d'obtenir un gâteau poreux et déshydraté, la boue récupérée étant vide, sèche et manipulable. Quelques heures suffisent contre trois mois dans le cadre d'une utilisation dite de séchage classique, pour obtenir un résultat comparable, et encore les caractéristiques de la boue obtenue étant bien meilleures avec l'invention car plus facilement recyclable.

Comme il va de soi et comme il résulte également de ce qui précède, la présente invention n'est pas limitée aux modes de réalisation plus particulièrement décrits. Elle en embrasse au contraire toutes les variantes et notamment celles dans lesquelles les piquages d'alimentation en effluents ne sont pas au nombre de deux mais au nombre de trois, quatre ou plus, répartis régulièrement et angulairement autour de l'enceinte.

L'invention est définie par les revendications annexées.

## Revendications

1. Procédé de clarification d'un liquide et/ou d'une boue par traitement de structures colloïdales contenues dans ledit liquide et/ou ladite boue alimentée en flux continu à un débit Q_{EB} = V_{EB}/heure, V_{EB} étant un volume, **caractérisé en ce que** on projette par pompage le flux dans une enceinte (2,E) en surpression par rapport à la pression atmosphérique, ladite enceinte étant une enceinte de passage du flux en pression et en continu, ladite enceinte présentant un volume v < V_{EB}/20, en ménageant dans l'enceinte une zone d'introduction d'air combinée à une zone de chocs hydrauliques d'introduction des flux liquides, une zone de brassage fortement turbulente (Re >> 3000) rendu possible par l'apport d'air à un débit d et une pression déterminés, de façon à transmettre une forte énergie cinétique (> 10.000 J) à partir de l'énergie cinétique de pompage à l'intérieur du volume de l'enceinte, et une zone fonctionnelle de décompression.

2. Procédé selon la revendication 1, **caractérisé en ce que** l'air est ajouté à un débit d > 1,5 Q_{EB}.

3. Procédé selon la revendication 2, **caractérisé en ce que** l'air est ajouté à un débit > 5 Q_{EB}.

4. Procédé selon l'une quelconque des revendications précédentes, **caractérisé en ce que** l'air est injecté à une pression relative comprise entre 0,1 et 1 bar.

5. Procédé selon l'une quelconque des revendications précédentes, **caractérisé en ce que** v ≤ V_{EB}/50.

6. Procédé selon la revendication 5, **caractérisé en ce que** v ≤ V_{EB}/100.

7. Procédé selon l'une quelconque des revendications précédentes, **caractérisé en ce qu'**on ajoute un réactif liquide qui est un floculant organique de type cationique.

8. Procédé selon l'une quelconque des revendications précédentes, **caractérisé en ce que** le débit Q_{EB} est supérieur ou égal à 15 m3/h, le débit d est supérieur ou égal à 25 m3/h et **en ce que** la pression relative dans l'enceinte est supérieure ou égale à 0,8 bar.

9. Procédé selon la revendication 8, **caractérisé en ce que** le débit Q_{EB} est supérieur ou égal à 20 m3/h, le débit d est supérieur ou égal à 50 m3/h et la pression relative dans l'enceinte est supérieure à 1,2 bar.

10. Procédé selon l'une quelconque des revendications précédentes, **caractérisé en ce que** il comporte de plus un traitement de séparation complémentaire disposé en aval.

11. Procédé selon la revendication 10, **caractérisé en ce que** le traitement complémentaire est un traitement par filtre à bande ou une centrifugation.

12. Procédé selon l'une quelconque des revendications précédentes, **caractérisé en ce qu'**on évacue la partie solide par décantation.

13. Procédé selon la revendication 12, **caractérisé en ce que** la décantation s'effectue dans un bac de décantation.

14. Procédé selon la revendication 13, **caractérisé en ce que** la matière solide est évacuée en partie basse.

15. Galette de matière solide décolloïdée obtenue par le procédé selon l'une quelconque des revendications 12 à 14, **caractérisé en ce que** elle présente une porosité comprise entre 5% et 15%.

## Patentansprüche

1. Verfahren zur Klärung einer Flüssigkeit und/oder eines Schlamms durch Behandlung kolloidaler Strukturen, die in der Flüssigkeit und/oder in dem Schlamm enthalten sind, der mit einem Durchfluss von Q_{EB} = V_{EB}/Stunde kontinuierlich eingespeist wird,
wobei V_{EB} ein Volumen ist, **dadurch gekennzeichnet, dass** der Fluss durch Pumpen in eine Kammer (2,E) mit Überdruck relativ zum Luftdruck gespritzt wird,
wobei die Kammer eine Kammer für die kontinuierliche Durchführung des Flusses unter Druck ist, wobei die Kammer ein Raumvolumen v < V_{EB}/20 aufweist, indem in der Kammer ein Bereich für die Luftzufuhr in Kombination mit einem Bereich für hydraulische Stöße für die Zuführ flüssiger Flüsse, ein durch die Luftzufuhr mit einem bestimmten Durchfluss d und einem bestimmten Druck stark turbulenter Rührbereich (Re >> 3000), um eine hohe kinetische Energie (> 10.000 J) aus der kinetischen Pumpenergie innerhalb des Kammerraumvolumens zu übertragen, und ein funktioneller Dekompressionsbereich ausgebildet werden.

2. Verfahren nach Anspruch 1,
**dadurch gekennzeichnet,**
**dass** die Luft mit einem Durchfluss d > 1,5 Q_{EB} zugesetzt wird.

3. Verfahren nach Anspruch 2,
**dadurch gekennzeichnet,**
**dass** die Luft mit einem Durchfluss > 5 Q_{EB} zugesetzt wird.

4. Verfahren nach einem beliebigen der vorhergehenden Ansprüche,
**dadurch gekennzeichnet,**
**dass** die Luft mit einem relativen Druck zwischen 0,1 und 1 bar eingespritzt wird.

5. Verfahren nach einem beliebigen der vorhergehenden Ansprüche,
**dadurch gekennzeichnet,**
**dass** v ≤ V_{EB}/50.

6. Verfahren nach Anspruch 5,
**dadurch gekennzeichnet,**
**dass** v ≤ V_{EB}/100.

7. Verfahren nach einem beliebigen der vorhergehenden Ansprüche,
**dadurch gekennzeichnet,**
**dass** ein flüssiges Reagenz zugesetzt wird, bei dem es sich um ein organisches Flockungsmittel kationischer Art handelt.

8. Verfahren nach einem beliebigen der vorhergehenden Ansprüche,
**dadurch gekennzeichnet,**
**dass** der Durchfluss Q_{EB} größer oder gleich 15 m³/h ist, der Durchfluss d größer oder gleich 25 m³/h ist und der relative Druck in der Kammer größer oder gleich 0,8 bar ist.

9. Verfahren nach Anspruch 8,
**dadurch gekennzeichnet,**
**dass** der Durchfluss Q_{EB} größer oder gleich 20 m³/h ist, der Durchfluss d größer oder gleich 50 m³/h ist und der relative Druck in der Kammer größer als 1,2 bar ist.

10. Verfahren nach einem beliebigen der vorhergehenden Ansprüche,
**dadurch gekennzeichnet,**
**dass** es ferner eine nachgelagerte zusätzliche Abscheidungsbehandlung umfasst.

11. Verfahren nach Anspruch 10,
**dadurch gekennzeichnet,**
**dass** es sich bei der zusätzlichen Behandlung um eine Behandlung mit Bandfilter oder um eine Zentrifugierung handelt.

12. Verfahren nach einem beliebigen der vorhergehenden Ansprüche,
**dadurch gekennzeichnet,**
**dass** der feste Anteil durch Dekantierung abgeführt wird.

13. Verfahren nach Anspruch 12,
**dadurch gekennzeichnet,**
**dass** die Dekantierung in einer Dekantierungswanne erfolgt.

14. Verfahren nach Anspruch 13,
**dadurch gekennzeichnet,**
**dass** der Feststoff im unteren Bereich abgeführt wird.

15. Schlammkuchen aus kolloidfrei gemachtem Feststoff, der mit dem Verfahren nach einem beliebigen der Ansprüche 12 bis 14 erzielt wird,
**dadurch gekennzeichnet,**
**dass** er eine Porosität zwischen 5 % und 15 % aufweist.

## Claims

1. Process for clarification of a liquid and/or of a sludge by treatment of colloidal structures contained in the said liquid and/or the said sludge supplied in a continuous flow at a flow rate Q_{EB} = V_{EB}/hour, V_{EB} being a volume, **characterised in that** the flow is projected by pumping into a chamber (2, E) at overpressure relative to atmospheric pressure, the said chamber being a chamber for passage of the continuous pressurised flow, the said chamber having a volume v < V_{EB} there being arranged in the chamber and their introduction zone combined with a hydraulic shock zone for introduction of the liquid flows, a very turbulent mixing zone (Re >> 3000) made possible by the input of air at a determined flow rate d and pressure, so as to transmit high kinetic energy (> 10.000 J) from the kinetic energy of pumping inside the volume of the chamber, and a functional decompression zone.

2. Process according to claim 1, **characterised in that** the air is added at a flow rate d > 1.5 Q_{EB}.

3. Process according to claim 2, **characterised in that** the air is added at a flow rate > 5 Q_{EB}.

4. Process according to any one of the preceding claims, **characterised in that** the air is injected at a relative pressure of between 0.1 and 1 bar.

5. Process according to any one of the preceding claims, **characterised in that** v ≤ V_{EB}/50.

6. Process according to claim 5, **characterised in that** v ≤ V_{EB}/100.

7. Process according to any one of the preceding claims, **characterised in that** a liquid reagent is added which is an organic flocculant of cationic type.

8. Process according to any one of the preceding claims, **characterised in that** the flow rate Q_{EB} is greater than or equal to 15 M3/h, the flow rate d is greater than or equal to 25 m3/h and **in that** the relative pressure in the chamber is greater than or equal to 0.8 bar.

9. Process according to claim 8, **characterised in that** the flow rate Q_{EB} is greater than or equal to 20 m3/h, the flow rate d is greater than or equal to 50 m3/h and the relative pressure in the chamber is greater than 1.2 bar.

10. Process according to any one of the preceding claims, **characterised in that** it also includes a complementary separation treatment arranged downstream.

11. Process according to claim 10, **characterised in that** the complementary treatment is a treatment by belt filter or centrifugation.

12. Process according to any one of the preceding claims, **characterised in that** the solid part is evacuated by decantation.

13. Process according to claim 12, **characterised in that** the decantation is performed in a decanting tank.

14. Process according to claim 13, **characterised in that** the solid material is evacuated at the lower part.

15. Cake of decolloided solid material obtained by the process according to any one of claims 12 to 14, **characterised in that** it has a porosity of between 5% and 15%.
